# EUROPEAN PATENT APPLICATION

(11) **EP 3 299 968 A1**
(43) Date of publication of application: **28.03.2018**
(21) Application number: 16795646.5
(22) Date of filing: 25.01.2016
(51) Int. Cl.: G06F 17/30

(54) **BIG DATA CALCULATION METHOD AND SYSTEM**

(30) Priority: 18.05.2015 CN 201510254618
(71) Applicant: ZTE Corporation, Shenzhen, Guangdong 518057 (CN)
(72) Inventor: LIU, Yong, Shenzhen Guangdong 518057 (CN); LU, Xiaohui, Shenzhen Guangdong 518057 (CN)
(74) Representative: Studio Torta S.p.A.
(86) International application number: PCT/CN2016/072038
(87) International publication number: WO 2016/184159

(57) **Abstract**

A big data calculation method and system. The method comprises: acquiring indication information for calculating big data (SI02); and calculating, according to the indication information, some of the big data, and outputting a calculation result (S104). The method and system solve the problems caused by provision of a result only when all tasks are completely calculated in a big data system architecture in the related art, thereby achieving the effect of assisting in making a decision to the greatest extent within restricted conditions.

## Description

### TECHNICAL FIELD

The present disclosure relates to the field of communications, and more particularly, to a big data calculation method and system.

### BACKGROUND

Big data technologies led by Google have been fashionable in the whole world, and respective applications based on Hadoop are also flourishing. The effects of the big data applications are increasingly expanded. According to institutional measurement and calculation, the total data volume in the whole world is doubled in every two years. In other words, the total data volume generated in recent two years is equivalent to the total data volume within the memory of humankind. Under this background, there will be essential changes from corporate strategy to industrial ecology, from academic research to production practice, and from urban management to country governance.

The big data refers to a data set with a transnormal size which is acquired, stored, managed and ability-analysized by a data tool, which does not mean that a data set exceeding a certain TB (terabyte) value can be deemed as big data. An International Data Corporation (IDC) defines the big data from four features, i.e., mass data volume (Volume), quick data velocity and dynamic data system (Velocity), variety of data (Variety) and huge data value (Value). Due to the requirement of supporting storage and calculation of large-scale data, cluster-based distributed storage and parallel computing system structure and hardware platform are usually needed for processing the big data. Regarding the above problems, open source communities and manufacturers at home and abroad are making corresponding tries and efforts. Typical systems for big data query and analysis include Hbase and Hive under Hadoop, Cassandra developed by Facebook, Dremel of Google, and Impala of Cloudera. In addition, there have been emerged many distributed data storage, management and query systems based on memory, such as a data warehouse Shark based on a memory calculation engine Spark of UC Berkeley AMPLab so as to achieve data query and analysis with a relatively high performance. There are also MPP (massively parallel processing) databases, such as GreenPlum of EMC and Vertica of HP. MapReduce is a calculation pattern most suitable for a batch processing of the big data. MapReduce is a data processing procedure of single input and two phases (Map and Reduce). The simple and easy-to-use features of MapReduce make it become a mainstream parallel computing pattern for big data processing that is most successful and widely accepted at present. With the efforts of the open source communities, a Hadoop system has been developed into a relatively mature big data processing platform at present, and has been developed into a whole ecosystem containing numerous data processing tools and environments. Spark is also a batch processing system, and has a great development in performance compared with Hadoop MapReduce, but is still inferior to Hadoop MapReduce in easy-to-use and stable features at present.

However, all these frames, applications and algorithms are intended to calculate a result for a decision maker to make a decision, thus ignoring some very useful phase results, i.e., incomplete calculation results. Regarding these frames, all aspects of a task shall be strictly defined before submitting the calculation task at present; and once the task is submitted, the task will be operated according to an originally set rule until the task is completely finished, so that a valuable result can be given. In case of large quantity (TB, PB (Petabyte), EB (Exabyte) levels...) and long time calculation (dozen hours and even dozens of hours), a phase calculation result may also be used for analysis and decision by the decision maker. For example, a result acquired by calculating 10T, 20T, 30T..., or calculating 1h, 2h, 3h..., (the dimension is definable) shall tend to a final and correct result, and the results within this process may be used for analysis and decision by the decision maker.

Regarding to some tasks such as law survey, missing population searching, escape of causing-trouble vehicles, screening of characteristic commodity, and other mass data analysis types, problems need to be solved in a restricted period, and the result can be provided only when the tasks are completely calculated in a usual big data system frame. Therefore, a good opportunity may be missed. Regarding some other business tasks such as financial survey and oil exploration, the data volume is too large, and in case that there is no enough time to conduct comprehensive analysis on the aspects of financial business and oil business, a phase result and even a sample statistics result can play a key role in these business decisions.

There are no effective solutions provided yet for the problems caused by provision of a result only when the task is completely calculated in a big data system architecture in the related art.

### SUMMARY

The present disclosure provides a big data calculation method and system, which at least solves the problem caused by provision of a result only when the task is completely calculated in a big data system architecture in the related art.

According to an aspect of embodiments of the present disclosure, a big data calculation method is provided, including: acquiring indication information for calculating big data; and calculating, according to the indication information, part of the big data, and outputting a calculation result.

Optionally, the above indication information includes at least one of the following information: the calculation result being a specified type, information of calculating the data in a predetermined time period, information of calculating specified data in the big data, and a preset data screening condition.

Optionally, the calculating, according to the indication information, part of the big data, and outputting the calculation result includes: stopping calculating the big data when the calculation result is of the specified type; and/or, stopping calculating the big data when current time exceeds the predetermined time period; and/or stopping calculating the big data after the specified data is completely calculated.

Optionally, the above data screening condition includes: a priority of each data or each kind of data in the big data.

Optionally, the calculating, according to the indication information, part of the big data includes: searching for a first case matched with the indication information according to the indication information, and invoking a first specified algorithm corresponding to the first case in an algorithm library to calculate the big data; or, searching for a second case according to the indication information, conducting a comprehensive decision on the second case and a second specified algorithm in the algorithm library to acquire a third specified algorithm, and calculating the big data according to the third specified algorithm.

Optionally, the method, before invoking the first specified algorithm corresponding to the first case in the algorithm library to calculate the big data, includes: selecting a case with a highest priority as the first case matched with the indication information in case that a plurality of the first cases are matched with the indication information.

Optionally, the above method further includes: calculating remaining data in the big data excluding said part of the big data when the calculation result does not meet a preset requirement.

Optionally, a manner of acquiring the indication information to calculate the big data includes at least one of the followings: acquiring the indication information from system-defined contents, receiving inputted indication information, and modifying existing indication information to acquire the indication information.

According to another aspect of the embodiments of the present disclosure, a big data calculation system is further provided, and the above system includes: an interacting component configured to receive indication information for calculating big data; and a core control component installed at a distributed node and connected to the interacting component, and configured to receive the indication information, calculate part of the data in the big data according to the indication information, and output a calculation result.

Optionally, the indication information includes at least one of the following information: the calculation result being a specified type, information of calculating the data in a predetermined time period, information of calculating specified data in the big data, and a preset data screening condition.

Optionally, the core control component is further configured to: stop calculating the big data when the calculation result is of the specified type; and/or, stop calculating the big data when current time exceeds the predetermined time period; and/or, stop calculating the big data after the specified data is completely calculated.

Optionally, the above data screening condition includes: a priority of each data or each kind of data in the big data.

Optionally, the system further includes: a past case library and an algorithm library; or, a past case library, an algorithm library and an implementation solution component, wherein the core control component searches for a first case matched with the indication information from the past case library according to the indication information; and invokes a first specified algorithm corresponding to the first case in the algorithm library to calculate the big data; or, the core control component calculates the big data according to a third specified algorithm, wherein the third specified algorithm is acquired by the implementation solution component conducting a comprehensive decision on a second case invoked from the past case library and a second specified algorithm invoked from the algorithm library according to the indication information received from the core control component.

Optionally, the core control component is further configured to select a case with a highest priority as the first case matched with the indication information in case that a plurality of the first cases are matched with the indication information.

Optionally, the core control component is further configured to calculate remaining data in the big data excluding said part of the data when the calculation result does not meet a preset requirement.

Optionally, the interacting component is further configured to acquire the indication information through at least one of the following manners: acquiring the indication information from system-defined contents, receiving inputted indication information, and modifying existing indication information to acquire the indication information.

According to the embodiments of the present disclosure, the indication information for calculating big data is acquired; and part of the data in the big data is calculated according to the indication information, and the calculation result is outputted. The problems caused by provision of a result only when a task is completely calculated in a big data system architecture in the related art are solved, thereby achieving the effect of assisting in making a decision to the greatest extent within restricted conditions.

### BRIEF DESCRIPTION OF THE DRAWINGS

The drawings described herein are used for providing further understanding to the invention, and constitute a part of the present application. The illustrative embodiments of the present invention and the descriptions thereof are used for explaining the invention, but are not construed as improper restriction to the present invention. In the drawings:
Fig. 1 is a flow chart of a big data calculation method according to an embodiment of the present disclosure;
Fig. 2 is a structure diagram of a big data calculation system according to an embodiment of the present disclosure;
Fig. 3 is a structure diagram (I) of a big data calculation system according to an embodiment of the present disclosure;
Fig. 4 is a task implementing flow chart of a single flow according to an embodiment of the present disclosure;
Fig. 5 is a frame component diagram of an incomplete calculation of big data according to an embodiment of the present disclosure;
Fig. 6 is a flow chart of run scheduling according to an embodiment of the present disclosure;
Fig. 7 is an illustrative diagram of search and exclusion according to an embodiment of the present disclosure;
Fig. 8 is an illustrative diagram of making a scope to be precise according to an embodiment of the present disclosure;
Fig. 9 is an illustrative diagram of classified calculation according to an embodiment of the present disclosure; and
Fig. 10 is an illustrative diagram of calculation from easiness to difficulty according to an embodiment of the present disclosure.

### DETAILED DESCRIPTION

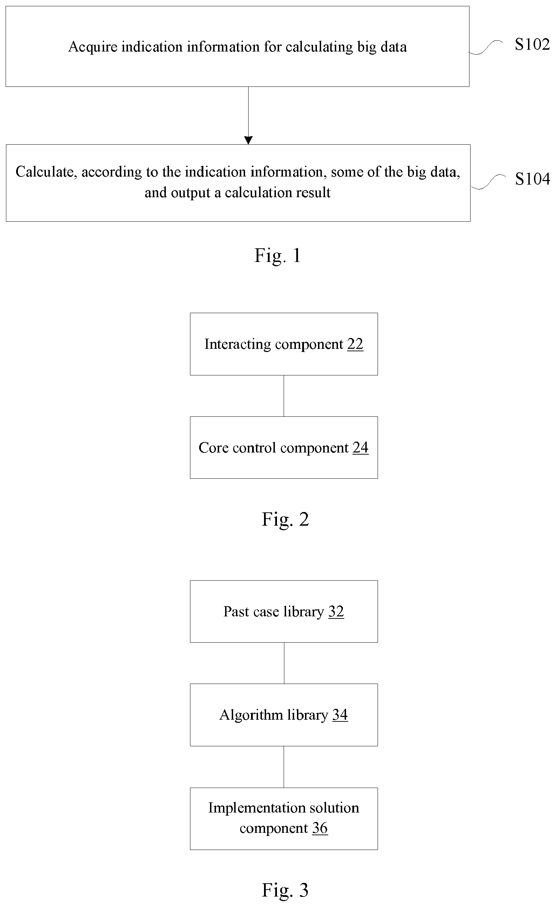

The present invention will be described in details with reference to the drawings and embodiments hereinafter. It should be noted that the embodiments in the present application and the features in the embodiments may be combined with each other in case of no conflicts. A big data calculation method is provided in the present embodiment. Fig. 1 is a flow chart of a big data calculation method according to the embodiment of the present disclosure, and as shown in Fig. 1, the flow includes the following steps.

In step S102, indication information for calculating big data is acquired.

In step S104, part of the big data is calculated according to the indication information, and a calculation result is outputted.

Through the above steps, part of the big data is calculated according to the indication information, instead of completely calculating a task. Compared with the related art in which the result can be provided only when the task is completely calculated, the above steps solve the problems caused by provision of a result only when the task is completely calculated in a big data system architecture in the related art, thereby achieving the effect of assisting in making a decision to the greatest extent within restricted conditions.

The above indication information may include various information, which is illustrated hereinafter. In an optional embodiment, the indication information may be one or more of the following information: the calculation result being a specified type, information of calculating the data in a predetermined time period, information of calculating specified data in the big data, and a preset data screening condition. In the process of calculating the big data, when the outputted calculation result is the specified type, the big data calculating is stopped; in the process of calculating the big data, a big data calculating time is regulated, in the regulated time, the big data is calculated and the calculation result is outputted; and in the process of calculating the big data, it is regulated to only calculate the specified data included in the big data, and output the calculation result. That is to say, the big data calculating is stopped in case that the calculation result is of the specified type; the big data calculating is stopped when the current time exceeds the predetermined time period; and the big data calculating is stopped after the specified data is completely calculated. Therefore, the big data calculation is restricted by setting the indication information, thus achieving an effect of conducting incomplete calculation on the big data.

In an optional embodiment, the above data screening condition may be a priority of each data or each kind of data in the big data. For example, the priority of each data or each kind of data may be a degree of importance or a degree of difficulty for acquisition of each data or each kind of data.

The above step S104 relates to calculating part of the big data according to the indication information. In an optional embodiment, a first case matched with the indication information may be searched for according to the indication information, and a first specified algorithm corresponding to the first case in an algorithm library may be invoked to calculate the big data; or, a second case may be searched for according to the indication information, a comprehensive decision may be conducted on the second case with a second specified algorithm in the algorithm library to acquire a third specified algorithm, and the big data is calculated according to the third specified algorithm. The development costs on the aspects of solutions and algorithms are reduced through reusing historical solutions. An example will be given below in which a comprehensive decision is conducted on the second specified algorithm in the algorithm library according to pre-stored cases. For example, a user may generally define an input including: a result content; a calculation dimension; and a screening condition. A historical case in the solution library (finding a criminal suspect) is: target orientation; time; and male, over 40 years old, and 170-180 tall. Then, if the implementation is conducted again, the user inputs: target orientation; time; female, younger than 20 years old, and 150-160 tall. The solution library will compare the input with the historical library and find that the above historical solution may be partially used, then the solution is acquired firstly, and a different part in the configuration of the solution is modified to form a new solution, and the new solution is given to a core system for implementation.

Before invoking the first specified algorithm corresponding to the first case in the algorithm library to calculate the big data, in an optional embodiment, in case that a plurality of the cases are matched with the indication information, a case with a highest priority is selected as the first case matched with the indication information. The priority of the case is generated by an evaluation record of a decision maker.

In an optional embodiment, remaining data in the big data excluding said part of the big data is calculated when the calculation result does not meet a preset requirement.

The above step S102 relates to acquiring the indication information for calculation of the big data; in an optional embodiment, the manner of acquiring the indication information may include: acquiring the indication information from system-defined contents, receiving inputted indication information, and modifying existing indication information to acquire the indication information.

Fig. 2 is a structure diagram of a big data calculation system according to the embodiments of the present disclosure. As shown in Fig. 2, the system includes: an interacting component 22 configured to receive indication information for calculating big data; and a core control component 24 installed on a distributed node and connected to the interacting component, and configured to receive the indication information, calculate part of data in the big data according to the indication information, and output a calculation result.

Optionally, the indication information includes at least one of the following information: the calculation result being a specified type, information of calculating the data in a predetermined time period, information of calculating specified data in the big data, and a preset data screening condition.

Optionally, the core control component 24 is further configured to: stop calculating the big data in case that the calculation result is of the specified type; and/or, stop calculating the big data when current time exceeds the predetermined time period; and/or, stop calculating the big data after the specified data is completely calculated.

Optionally, the data screening condition includes: a priority of each data or each kind of data in the big data.

Fig. 3 is a structure diagram (I) of a big data calculation system according to the embodiments of the present disclosure. As shown in Fig. 3, the system further includes: a past case library 32 and an algorithm library 34; or, a past case library 32, an algorithm library 34 and an implementation solution component 36. The core control component 24 searches for a first case matched with the indication information from the past case library 32 according to the indication information; and invokes a first specified algorithm corresponding to the first case in the algorithm library 34 to calculate the big data; or, the core control component 24 calculates the big data according to a third specified algorithm, wherein the third specified algorithm is acquired by the implementation solution component 36 conducting a comprehensive decision on a second case invoked from the past case library 32 and a second specified algorithm invoked from the algorithm library 34 according to the indication information received from the core control component 24.

Optionally, the core control component 24 is further configured to, in case that a plurality of the first cases are matched with the indication information, select a case with a highest priority as the first case matched with the indication information.

Optionally, the core control component 24 is further configured to, when the calculation result does not meet a preset requirement, calculate remaining data in the big data excluding said part of data.

Optionally, the interacting component 22 is further configured to acquire the indication information through at least one of the following manners:
acquiring the indication information from system-defined contents, receiving inputted indication information, and modifying existing indication information to acquire the indication information. It should be noted that the above interacting component 22, the core control component 24, the past case library 32, the algorithm library 34 and the implementation solution component 36 may be achieved through a software or a hardware, and the latter may be achieved through, but is not limited to, the following manners: the interacting component 22, the core control component 24, the past case library 32, the algorithm library 34 and the implementation solution component 36 are all disposed in the same processor; or, the interacting component 22, the core control component 24, the past case library 32, the algorithm library 34 and the implementation solution component 36 are respectively disposed in a first processor, a second processor....

Regarding the above problems in related art, statements are made hereinafter with reference to a specific optional embodiment hereinafter, and the above optional embodiments and the optional implementation manners thereof are combined in the following optional embodiment.

Regarding a decision that needs to be made under a certain restriction condition (the dimension includes: time, data volume, precision and economic cost), calculation is conducted through the big data or distributed calculation means to give data supports in different phases to the decision maker for analysis use.

The technical solution of the optional embodiment is as follows.

Core process:
1. A decision-making target is defined and a frame system is inputted.
2. The frame system automatically analyzes a possible phase target and an applicable algorithm.
3. A calculation solution is set according to the target inside the system, and an algorithm is enabled to implement the solution.
4. The system triggers a setting condition for stopping calculation, and gives a result.

The technical solution is described herein:
3-1 The decision-making target is defined - which is inputted by a decision maker (needing assistance) through a UI (User Interface) system (frame interacting component). The inputted contents include: a pattern of calculating a final target result, a trigger condition of stopping calculation, and a known condition applicable for screening. The above three contents may be selected through the UI, to select the contents already-defined by the system; or new contents may be added manually; or the existing contents are modified.
   The trigger condition of stopping calculation is also called calculation dimension, and the system locates the phase target according to this dimension. When the dimension is time, the system may finish the calculation in a restricted time. When the dimension is data volume, the system may finish the calculation after calculating a restricted data volume. Other dimensions may be added manually according to the redeveloped solution.
   If the trigger condition is one sequence, then the steps 2 to 4 in the core process will be circularly implemented according to the sequence, until the trigger condition of the sequence is completely implemented.
3-2 The frame system is inputted - the contents inputted by the user (the decision maker) are submitted to the core control component of the frame by a frame interacting component.
3-3 The frame system automatically analyzes the phase target - an internal flow of this action is comparing the contents inputted by the user with the "past case integration and external successful case import library" so as to determine the latest target.
   If a completely matched case can be found through matching the three items of contents, then the system implements the solution of the case. If the top two of the three items of the contents are matched, but the third item is not matched, then during calculation, a screening algorithm is firstly eliminated, and in the case that a screening condition appears, a screening operation is conducted. If only a corresponding case is found for one of the top two items, and no corresponding case is found for the other item, then calculation is conducted according to the item of the content having the corresponding case. If all contents do not have a corresponding case, then calculation is not implemented, and an error result is fed back to the UI.
   When a plurality of solutions are matched during the solution matching process, the system will match the solution with a highest evaluation optimally, and other solutions are called as alternative solutions. The solution evaluation is generated by evaluation records of the decision maker. The evaluation may have a corresponding change for every implementation.
3-4 The frame system automatically analyzes the applicable algorithm- the applicable algorithm is selected according to the implementation case. The algorithm selection may be determined in the case. The screening condition algorithms exist independently and distinguished from each other. In the third item of the contents inputted by the user, a screening condition algorithm corresponding to the content that can be matched will be implemented preferentially.
3-5 The calculation solution is set according to the target inside the system- the system generates the calculation solution according to the determination of the phase target and the condition of the algorithm selection. This calculation solution may be called as a calculation case of this time. If the case is finally evaluated by the decision maker as a grade above a grade of having effect, then the case will be stored in the past case library. If an order among a plurality of algorithms can be adjusted when generating the calculation solution, then the system can reasonably select the implementation solution with the optimum performance.
3-6 The calculation implementation is enabled - the system automatically distributes the solution to a whole cluster for implementation.
3-7 The system triggers the setting condition for stopping calculation and gives the result - when the stopping condition is satisfied, the system may feed back the result immediately no matter the result complies with the expectation or not.
   During an actual application, the function is applied for multiple times on the basis of the core function, so that a result more favorable to the decision can be gradually acquired.
3-8 The result becomes accurate gradually specific to the time dimension.
   3-8-1 Searching and exclusion - aiming at one target or some targets in the big data. The calculated data blocks which are not targeted will be marked as calculated resultless areas. After the setting time point is expired, the resultless areas are fed back to the decision maker as the phase results. If the decision maker still needs assistance of calculation decision, a second calculation may be started, and the completed results can be excluded at the beginning of calculation. This action is repeated in the same manner, until the decision maker does not need to conduct calculation assistance or the calculation result is completely calculated. The solution may be used for target searching, such as: chasing of wanted criminal, arrest of hit-and-run, and finding of missing children.
3-9 The calculation results are given gradually specific to the data volume.
   3-9-1 Accurate scope - calculation statistics (such as an average value, a variance and other statistics results) aiming at all data in the big data. The method of sampling survey in statistics is used. The data is sampled for calculation, and the calculated data will be transferred to other positions from a data source, and is not used as the data source of a next calculation. Both the stopping conditions for the second calculation and the final calculation are similar to the searching and exclusion method.
   3-9-2 Classified calculation- if it is indicated in the screening condition inputted by the user that the data in the big data may be classified by types and the type subordination, the data with a higher importance may be firstly calculated according to the types. The feedback results are fed back successively according to the calculation order.
   3-9-3 The calculation is conducted from easiness to difficulty - when the acquisition conditions of the data source are inconsistent, the data which is easier to be acquired is calculated firstly. Because different hardware is consumed by data loading and algorithm calculation, such a manner is beneficial for increasing the performance. Such a manner is suitable for the condition that there are obvious groups of data sources.

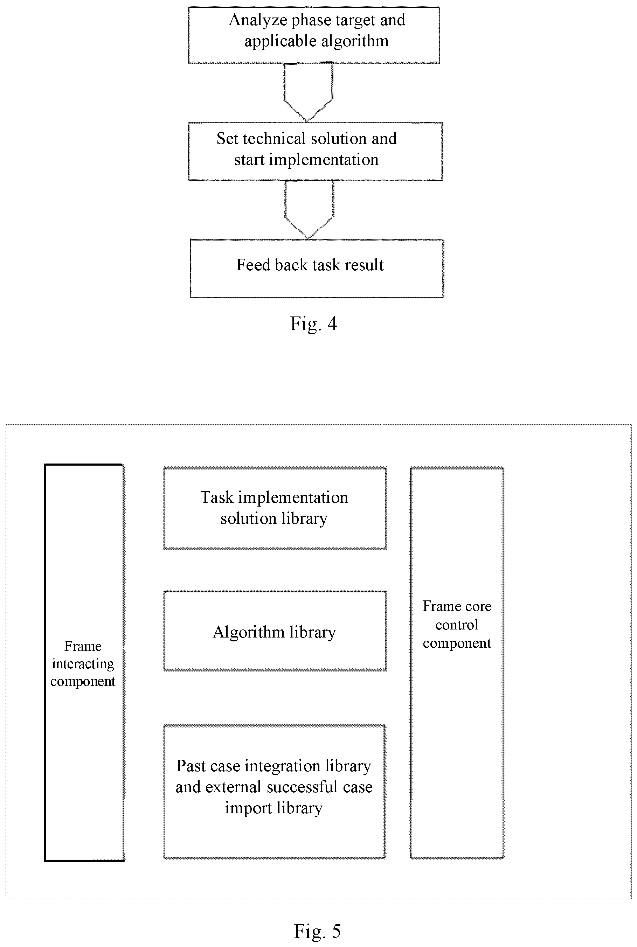

      Fig. 4 is a task implementing flow chart of a single flow according to an embodiment of the present disclosure. As shown in Fig. 4, it is an operation flow conducted during an internal algorithm calculation. The three steps are implemented by other components that are automatically invoked by the core control component. The task may be only stopped when all the trigger conditions are triggered, and all calculations are completed. In an exceptional case, the task may be compulsively stopped through the UI manually.
      Fig. 5 is a frame component diagram of an incomplete calculation of big data according to an embodiment of the present disclosure; and Fig. 5 is illustrated hereinafter.
   4-2-1 Frame interacting component- configured to communicate with the user.
      When the task is started, the frame interacting component helps the user to input a decision-making target of the task, and provides several phase targets and applicable algorithms to the user for selection; and provides a task timer to the user for selection of the implementation time. The component may enable the implementation of the task, and may also suspend or temporarily stop the task.
      The frame interacting component feeds back timely during the process of implementing the task, and provides several incomplete or complete results to the user for decision reference after the task is completed.
   4-2-2 Frame core control component - configured to control the operation of the task.
      The frame core control component controls the algorithm calculation.
      The frame core control component controls the result output and ranks the results.
      The frame core control component controls the load balancing of a distributed cluster.
      The component is a distributed cluster.
   4-2-3 Task implementation solution component- configured to assemble the invoked past case library data and the algorithm library data, so as to generate the implementation solution of the present calculation.
      Two types are classified according to the result aspect: one type is feeding back results in a sequence, and the other type is returning an incomplete result after the dimension is completed. In other aspects, it is possible to set phase definitions and which result is fed back.
   4-2-4 Past case integration library and external successful case import library
      When a case is implemented once, the basic information of the case will be stored in the case library with the evaluation of the decision maker. The cases of others may also be imported from the outside. In this way, the case with a higher evaluation may be reused with the help of the past cases. The incompletely matched cases may also be used to combine an implementation solution.
   4-2-5 Apart of basic algorithms of the algorithms in the algorithm library are developed by a frame developer. The other parts may be developed by staffs with specific application requirements.

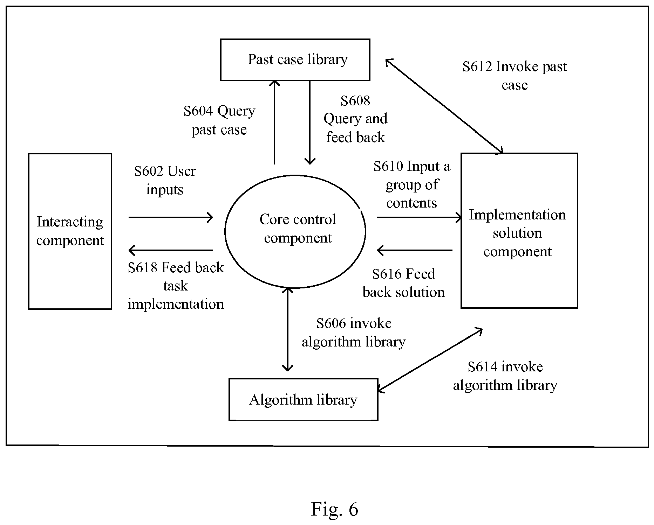

Fig. 6 is a flow chart of run scheduling according to an embodiment of the present disclosure. As shown in Fig. 6, the flow includes the following steps.

In step S602, an interacting component receives task information and informs a core component to make an action.

In S604, the core component sends the task information to the past case library and queries a past case associated with the task information. If there is a completely matched case, step S606 is directly implemented, then the calculation is conducted, and step S618 is implemented. If the case is matched incompletely, then step S610, step S612, step S614, step S616 and step S618 are implemented.

In step S606, an algorithm library is invoked.

In step S608, query and feedback are conducted.

In step S610, the core component inputs related information (including one of sequences for the trigger condition of stopping calculation) into a task implementation solution component, and the component invokes the past case library (step S612), invokes the algorithm library (step S614), and then combines an implementation solution by integrating all the information.

In step S612, a past case is invoked.

In step S614, the algorithm library is invoked.

In step S616, the implementation solution component feeds back the implementation solution, and the core component starts to implement the solution.

In step S618, the core components feeds back to the interacting component after completing the implementation.

In case that the task is a multiple-phase multiple-times task, after step S618 is completed, the operation of step S604 is automatically started, and the process is repeated according to the above order (excluding step S602).

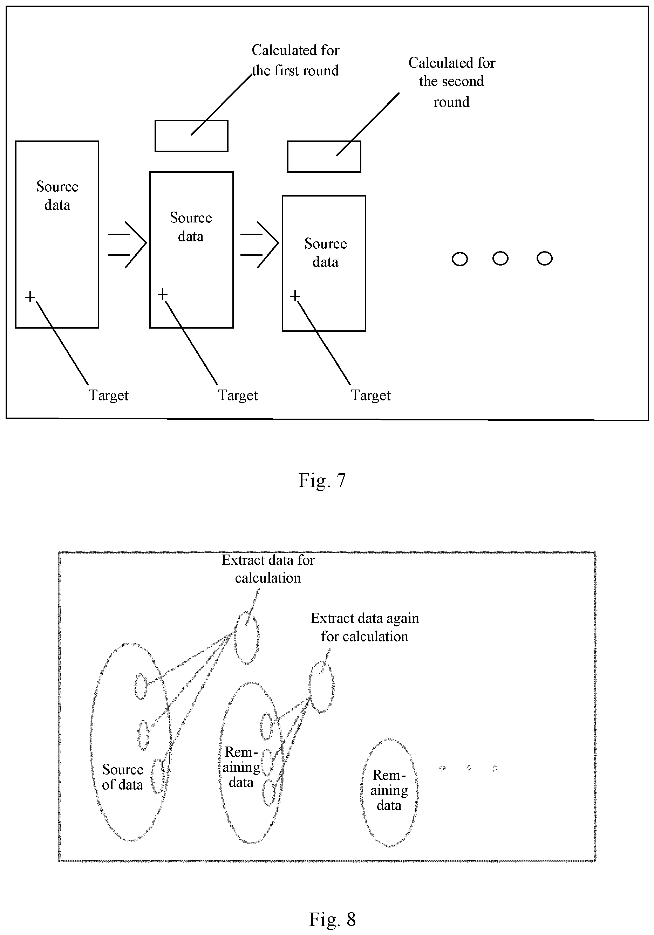

Fig. 7 is an illustrative diagram of search and exclusion according to an embodiment of the present disclosure; and statements are conducted hereinafter according to Fig. 7.

The calculation target is to find one or more targets in searching data. (Fig. 7 is specific to one target only)

(The content inputted by the user is a single clear result; the time is used as the trigger condition of stopping calculation; and the screening condition does not involve in implementation solution and algorithm selection.)

When the time is used as the trigger condition of stopping calculation, after the first round of calculation is complete, if no target is found, the information of the calculated data blocks without the target will be fed back to the user as an incomplete result. If the target is found, then the information of the target is fed back.

The calculation may be stopped if the target is found, and in case that the target is not found, a next round of calculation is conducted excluding the calculated data source.

Fig. 8 is an illustrative diagram of making scope to be precise according to an embodiment of the present disclosure; and the statements are conducted hereinafter according to Fig. 8.

A calculation target is to perform a statistics on the whole data source, such as an average number, a sum, an average number of some restricted types, and a sum of a certain restricted type, etc.

(The content inputted by the user is a single clear result; the data volume is used as the trigger condition of stopping calculation; and the screening condition does not involve in implementation solution and algorithm selection.)

A sample survey method is used to extract a part of all the data as the representative of the whole data set for calculation. The more proportion the sample has in all the data, the more accurate the result is. Moreover, after one time of calculation, multiple calculations may be conducted subsequently after excluding the calculated data. In this way, the data is not repeatedly calculated, and then it is possible to give the needed result in time and make the result be more accurate without wasting performances.

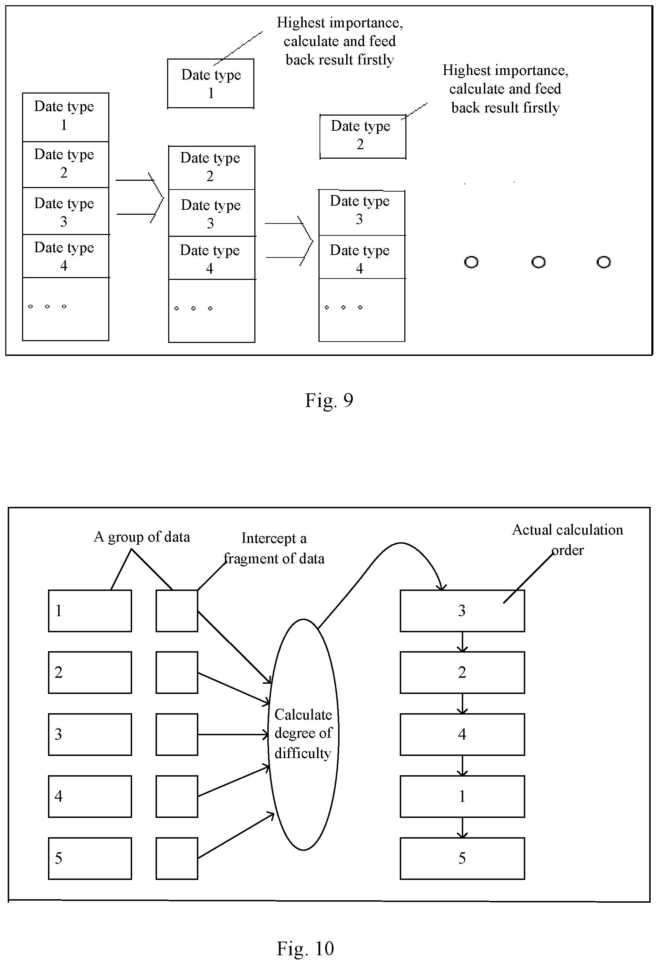

Fig. 9 is an illustrative diagram of classified calculation according to an embodiment of the present disclosure; and statements are conducted hereinafter according to Fig. 9.

The result of the calculation target of the embodiment is not restricted. When determining the calculation implementation solution and algorithm, judgment is not made according to the calculation target.

(The type of the calculation result inputted by the user does not involve in the implementation solution and algorithm selection; the type is used as the condition of stopping calculation, and a sequence with types arranged according to the subordination is added; and the screening condition does not involve in implementation solution and algorithm selection.)

Fig. 10 is an illustrative diagram of calculation from easiness to difficulty according to an embodiment of the present disclosure; and statements are conducted hereinafter according to Fig. 10.

The result of the calculation target of the embodiment is not restricted. When determining the calculation implementation solution and algorithm, judgment is not made according to the calculation target.

(The type of the calculation result inputted by the user does not involve in the implementation solution and algorithm selection; the data group is used as the condition of stopping calculation; and the screening condition relates to a distinguishing manner of the data group.) The distinguishing manner of the data group may typically be a data storage place; a data source (different operators, etc.); and a data storage format.

In the calculation process in Fig. 10, one fragment of each group of data (with the same size) is intercepted to test a degree of difficulty at first. The generated result is used for ranking the calculation orders of the data group, and then the calculation may be conducted by the batch calculation manner in Fig. 9.

Derivative use manner: after each group of data is completely calculated, the remaining data will be ranked according to the degree of difficulty.

In an optional embodiment, a machine with a higher reliability is needed by the frame interaction component, and installation in dual machines is recommended. The frame core control component is installed in a distributed manner, and is installed at each distributed node. A management node may be automatically selected by an internal mechanism, and the node may not conduct a calculation with full load. The management node is directly communicated with the interacting component, and other nodes are not communicated with the machines outside the management node excluding invoking data from the data source. The task implementation solution component, the algorithm library, the past case integration library and the external successful case import library may either be separately installed or may be combined. The data source may be in various common formats, such as: hdfs, nfs, and ftp of hadoop, etc.

To sum up, according to the big data incomplete calculation system provided by the embodiments of the present disclosure, when the decision maker needs to make a major decision, there are often various restrictions, such as time restriction. The embodiments of the present disclosure can give help to decision by most probability under these restrictions, so as to reduce the risk brought by the decision. Meanwhile, the embodiments of the present disclosure reuse the historical solutions, which can reduce the development costs on solutions and algorithms. The accumulation of the historical solutions can continuously increase the calculation success rate of the system and the matching ratio of the solution. The embodiments of the present disclosure relate to a self-study and self-progress algorithm frame.

In another embodiment, there is also provided a software for performing the technical solutions described in the embodiments and preferred embodiments described above.

In another embodiment, there is also provided a storage medium in which the above-mentioned software is stored, including but not limited to: optical disks, floppy disks, hard disks, rewritable memories, and the like.

It will be apparent to those skilled in the art that the above-described modules or steps of the present invention may be implemented by a general purpose computing device which may be focused on a single computing device or distributed over a network consisted of a plurality of computing devices, which may optionally be implemented by a program code executable by the computing device, so that they may be stored in a storage device and executed by the computing device and, in some cases, the steps shown or described may be performed in a different sequence; or they are separately made into each integrated circuit module, or multiple modules or steps therein are made into a single integrated circuit module. Thus, the present invention is not limited to any particular combination of hardware and software.

The foregoing are only preferred embodiments of the invention and are not intended to limit the invention, and various changes and modifications may be made by those skilled in the art. Any modifications, equivalent substitutions, improvements, and the like within the spirit and principles of the invention shall be included within the protection scope of the invention.

### INDUSTRIAL APPLICABILITY

According to the embodiments of the present disclosure, the indication information for calculating big data is acquired; and part of the data in the big data is calculated according to the indication information, and the calculation result is outputted. In this way, the problems caused by provision of a result only when all tasks are completely calculated in a big data system architecture in the related art are solved, thereby achieving the effect of assisting in making a decision to the greatest extent within restricted conditions.

## Claims

1. A big data calculation method, comprising:
acquiring indication information for calculating big data; and
calculating, according to the indication information, part of the big data, and outputting a calculation result.

2. The method according to claim 1, wherein the indication information comprises at least one of the following information: the calculation result being a specified type, information of calculating the data in a predetermined time period, information of calculating specified data in the big data, and a preset data screening condition.

3. The method according to claim 2, wherein the calculating, according to the indication information, part of the big data, and outputting the calculation result comprises:
stopping calculating the big data when the calculation result is of the specified type; and/or,
stopping calculating the big data when current time exceeds the predetermined time period; and/or
stopping calculating the big data after the specified data is completely calculated.

4. The method according to claim 2, wherein the data screening condition comprises: a priority of each data or each kind of data in the big data.

5. The method according to claim 1, wherein the calculating, according to the indication information, part of the big data comprises:
searching for a first case matched with the indication information according to the indication information, and invoking a first specified algorithm corresponding to the first case in an algorithm library to calculate the big data; or,
searching for a second case according to the indication information, conducting a comprehensive decision on the second case and a second specified algorithm in an algorithm library to acquire a third specified algorithm, and calculating the big data according to the third specified algorithm.

6. The method according to claim 5, wherein the method, before invoking the first specified algorithm corresponding to the first case in the algorithm library to calculate the big data, comprises:
when a plurality of the first cases are matched with the indication information, selecting a case with a highest priority as the first case matched with the indication information.

7. The method according to claim 1, further comprising:
calculating remaining data in the big data excluding said part of the data when the calculation result does not meet a preset requirement.

8. The method according to any one of claims 1 to 7, wherein a manner of acquiring the indication information to calculate the big data comprises at least one of the followings:
acquiring the indication information from system-defined contents, receiving inputted indication information, and modifying existing indication information to acquire the indication information.

9. A big data calculation system, comprising:
an interacting component configured to receive indication information for calculating big data; and
a core control component installed at a distributed node and connected to the interacting component, and configured to receive the indication information, calculate part of data in the big data according to the indication information, and output a calculation result.

10. The system according to claim 9, wherein the indication information comprises at least one of the following information: the calculation result being a specified type, information of calculating the data in a predetermined time period, information of calculating specified data in the big data, and a preset data screening condition.

11. The system according to claim 10, wherein the core control component is further configured to: stop calculating the big data when the calculation result is of the specified type; and/or, stop calculating the big data when current time exceeds the predetermined time period; and/or, stop calculating the big data after the specified data is completely calculated.

12. The system according to claim 10, wherein the data screening condition comprises: a priority of each data or each kind of data in the big data.

13. The system according to claim 9, further comprising: a past case library and an algorithm library; or, a past case library, an algorithm library and a solution implementation component, wherein
the core control component searches for a first case matched with the indication information from the past case library according to the indication information; and invokes a first specified algorithm corresponding to the first case in the algorithm library to calculate the big data; or,
the core control component calculates the big data according to a third specified algorithm, wherein the third specified algorithm is acquired by the implementation solution component conducting a comprehensive decision on a second case invoked from the past case library and a second specified algorithm invoked from the algorithm library according to the indication information received from the core control component.

14. The system according to claim 13, wherein the core control component is further configured to, when a plurality of the first cases are matched with the indication information, select a case with a highest priority as the first case matched with the indication information.

15. The system according to claim 9, wherein the core control component is further configured to calculate remaining data in the big data excluding said part of data when the calculation result does not meet a preset requirement.

16. The system according to any one of claims 9 to 15, wherein the interacting component is further configured to acquire the indication information through at least one of the following manners:
acquiring the indication information from system-defined contents, receiving inputted indication information, and modifying existing indication information to acquire the indication information.
